# EUROPEAN PATENT APPLICATION

(11) **EP 2 808 456 A1**
(43) Date of publication of application: **03.12.2014**
(21) Application number: 14158268.4
(22) Date of filing: 07.03.2014
(51) Int. Cl.: E03C 1/042, E03C 1/04, F16K 11/16

(54) **Dislocatable, self-sealable tap**

(30) Priority: 01.05.2013 US 201313874682
(71) Applicant: Tuineag, Stefan, Irvine, CA 92606 (US)
(72) Inventor: Tuineag, Stefan, Irvine, CA 92606 (US)
(74) Representative: Winblad, Christian

(57) **Abstract**

Disclosed is a dislocatable self-sealable dual pipe hot and cold water supply valve that is coaxially related to the axis of the water flow and is axially rotatably adjustable with single point of discharge. The supply valve comprises a self-sealing piping structure port (61) comprising of a dual piping interface. The interface can be connected to an existing piping structure separately supplying hot and cold water. The interface comprises a dual reservoir section (63) fluidly connected to said dual piping interface, each said reservoir sections having an individual sealing seat (62L) with an associated moving ball (68) and a pipe outlet, where water flows through said reservoir section, around said ball into said outlet. The supply valve further comprises a rotatable valve body housing (40) fluidly connected to and dislocatable from said self-sealing piping structure port, comprising a moving ball dislocation means (110), an anti-scalding and temperature balancing means, a cartridge case containing flow adjusting means and water pressure balancing controls disks, and an axially rotating and displaceable hollow valve outlet, said outlet being coaxial to the flow of water through said valve.

## Description

### BACKGROUND OF THE INVENTION

### Field of the Invention

The present invention provides plumbing fixtures for both a bathtub and shower.

### Description of the Prior Art

A prior art search on the concept of providing a plumbing fixture that replaces a hand held shower and bathtub filler spout with a single device, a switch controlling which function is operable was conducted. The results are as follows:

Pre-Grant Publication 2009/0200401 is directed to a sprayer assembly that is capable of simultaneously controlling on/off function as well as flow selection and is operated by a button 26 located on sprayer body 12. This sprayer may be used in connection with a kitchen faucet but may be utilized as part of a tub filler system with a shower function. Referring to the figures, the sprayer 10 has a sprayer body 12 with a lower end in the form of a handle 18 formed with a hose connector 14 for connection to a water supply hose 21. The sprayer body 12 has an outlet head 16 which is operated by means of a toggle rocker button 24 which is used to change the spray pattern that flows from the outlet head 16. A second actuator in the form of an on/off control button 26 is located near the neck of the sprayer body. The spray pattern emanating from the outlet head 16 can be toggled between a regular flow pattern and an aerated flow pattern using the toggle rocker button 24.

U.S. Patent 8,177,147 to Engel is directed to a showerhead with rotatable oval spray pattern and handheld spray pattern controller. The showerhead described provides for rotation of the showerhead spray pattern as well as for manual control for selecting various spray patterns. Referring to the figures, the showerhead assembly 1 includes an elongate handle 3 and a threaded inlet 7 for connecting to a water source. Showerhead 5 has a plurality of spray holes 17a- 17d for expelling water in the form of various spray patterns. One-handed operation is facilitated by a controller which includes a button that projects through hole 10 formed in handle housing 9. The button cover 13 is depressed for selecting a desired spray pattern.

U.S. Patent 7,070,125 is directed to a multi-pattern pull-out spray head. Referring to the figures, the spray head 10 is configured to be a pull-out spray that may be mounted to a faucet body 50 and includes control valves 52 for temperature control and now regulation. The spray head 10 includes a housing 12 with a fluid diversion system 14 and a multi-pattern head 16. The device also includes a rocker switch assembly 22 with a sliding switch assembly 24 that provide for the necessary control of the flow rate as well as the mixing function for cold and hot water choices.

U.S. Patent 6,145,757 to Knapp is directed to a showerhead with switching of spray modes. Push buttons are provided in the handle portion to open or close one of the valves. Referring to the figures, the showerhead includes a fastening device 1 such as a screw for the purpose of connecting a conventional flexible supply hose. Intercept valves 13 and 14 with cooperating seats 7 and 8 constitute the operating push buttons so that aerated water jet or subdivided water jet streams maybe selected. Furthermore, control of the flow rate so that an on/off function may be achieved is also possible.

U.S. Patent 5,735,467 to Lee is directed to a three-way adjustable shower device so that the water flow rate and the temperature thereof may be controlled and operated by means of pushing stud 21 and push button head 60. Thus, the object of the invention is to provide adjustable functions and features including water flow rate control, water temperature adjustments and three-way water outlet selection (spraying, spouting and flushing).

A prior art search was also conducted on a concept of a shower valve that is hidden within the shower arm (or replaces the shower arm) with the shower head placed directly on the valve outlet. The most relevant art developed being as follows:

Pre-Grant Publication 2008/0245897 to Nobili is directed to a showerhead wherein controls 25 and 35 control both water discharging and shutting off operations as well as mixing warm/cold flows. Control levers 13 and 14 operate controls 25 and 35 and extend radially out from the body of showerhead 1 and thus rotate coaxially with housing 50 of showerhead 1. The details of the operation of the valve portions of this showerhead are described in the reference but it is pointed out that both the control flow rate as well as the mixing function are both controlled by levers that rotate about the housing and coaxial with the housing 50 of showerhead I.

Pre-Grant Publication 2012/0228407 to Torontow is directed to a multi-nozzle misting showerhead which is controlled by a handle 14 to increase or decrease flow rate by operating valve plunger 31 all of which are coaxial with both the showerhead and the shower aim. Referring to the figures, the showerhead housing 11 comprises a plurality of water conduits that feed inflowing water uniformly to the plurality of nozzles 12 provided on the showerhead. On the backside of housing 11 is provided a flow control handle 14 which can be rotated with respect to the shower arm 15 to open and close an internal valve that acts as a flow limiter into the showerhead housing 11. The control handle 14 is rotatably mounted behind the showerhead housing 11 and rotates about the connection region to translate a valve stopper in or out of a diaphragm aperture regulating the flow of water from that arm 11 through the connecting region and into the shoswrhead housing 11 and then to the nozzles 12.

U.S. Patent 7,325,754 to Mukais is directed to a shower nozzle which operates by means of pushbutton 12 that manipulates the open/close valve 6 The pushbutton 12 and the open/close valve 6 are coaxial with one another even though rotational movement to operate the valve is not involved. In addition, the pushbutton 12 may be rotated about the same axis to advance or retract the button in the axial direction changing the distance that the shaft pushes the open/close valve 6 in order to change the flow rate in addition to the water jetting and water stopping function already described.

U.S. Patent 7,114,515 to Sponheimer et al is directed to an in-line valve cartridge for use in sanitary fittings for both bath and kitchen applications for use on faucets or handsprays. The in-line valve cartridge may be used in both single and mixed temperature applications and may be used to control both the flow and temperature of water discharged from a faucet or a showerhead. Referring to the figures, the cartridge 10 comprises a cylindrical housing 12 for controlling water that leaves from cartridge 12 through longitudinal body 14. A stationary ceramics disk 26 includes at least one aperture 26a that facilitates flow of cold water, hot water or a combination thereof. Rotating disk 28 is rotationally disposed relative to stationary disk 26 and is operated by driving member 20 which provides rotational movement coaxially with the cartridge 10.

U.S. Patent 7,314,062 to Chen is directed to a water control structure for the spout of faucets and is located on the discharge end of the faucet spout which rotates coaxially with the valve portion of the device This patent provides another example of a valve located at or near the discharge portion of a faucet or showerhead wherein the amount of both hot and cold water are controlled by means of rotational motion about the axis of the valve.

### SUMMARY OF THE INVENTION

The present invention provides three embodiments of a plumbing fixture, the first embodiment disclosing a single fixture that replaces the hand held shower and the tub filler spout. The fixture contains outlets both for a shower and for a tub filler. A switch is provided to enable a user to switch between the two functions and the fixture is removably attached to the base of a faucet.

In the second embodiment, a shower valve is hidden in the shower or replaces the shower arm. The valve comprises a dual pipe inlet that connects the shower valve to an anti-scalding device, the temperature of the water being adjusted by ceramic disks, the disks also controlling water flow. The disks, in turn, are controlled by a rotating valve outlet.

The third embodiment provides a fixture that allows a shower valve mounted inside or outside a wall to be disconnected without shutting the water supply or removing the wall containing the fixture. This is accomplished by adding a self-sealing device Side the supply pipes.

The present invention thus provides plumbing fixtures that provide advantages over fixtures currently available.

### BRIEF DESCRIPTION OF THE DRAWINGS

For a better understanding of the present invention as well as other objects and further features thereof, reference is made to the following description which is to be read in conjunction with the accompanying drawing therein:
Figure 1(a) is a front view of the first embodiment of the fixture of the present invention and Figure 1(b) is a side view thereof with a hand held shower as a base and Figures 1(c) and 1(d) illustrate the operational modes of a push-pull switch;
Figures 2(a) - 2(c) illustrate the fixture of Figures 1(a) and 1(b) assembled to a faucet base;
Figures 3(a)-3(c) illustrate a second embodiment of the fixture of the present invention;
Figure 4 illustrates the fixture of Figure 3 positioned in a shower line;
Figures 5(a)- 5(e) illustrate a third embodiment of the fixture of the invention; and
Figure 6 illustrate the fixture shown in Figure 5 positioned in a shower line.

### DESCRIPTION OF THE INVENTION

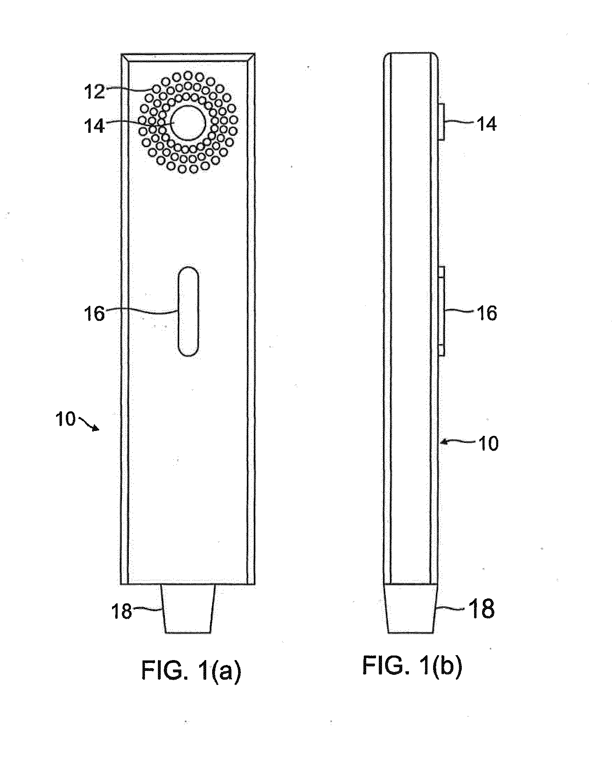

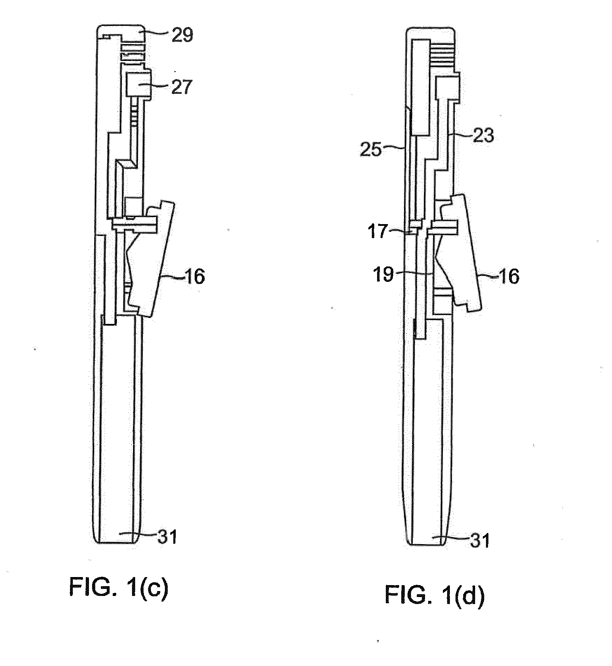

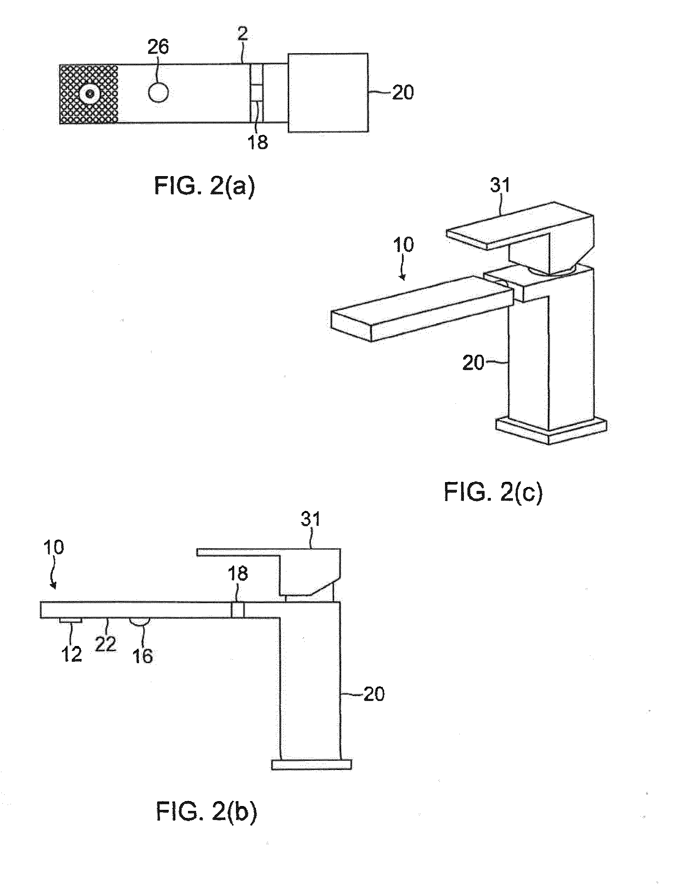

Referring now to Figures 1 and 2, a first embodiment of the present invention is illustrated.

The plumbing industry, in a tub and shower application, typically uses a spout to fill up the tub and a head nozzle for a shower and, in a roman style tub with hand held application, a spout is used to fill the tub and a hand held device for showering. The uniform plumbing code specifies that a shower head by definition can not have a flow rate greater than 2 gallons per minute and a tub spout can not have a flow rate greater than 5 gallons per minute. The fixture embodiments of the present invention provide a single device that can fill a tub or provide a shower.

Figure 1(a) is a simplified front view of the first embodiment of the present invention and illustrates fixture 10 having a rectangular shape (the fixture can take other shapes) and includes outlets 12 for the shower function and outlet 14 for the tub filler function. A switch, such as a push-pull switch, 16 enables a user to select which of the two functions are to be used (Figure 1(b) is aside view of the fixture 10). Figures 1(c) and 1(d) illustrate the operational modes a typical push-pull switch system which can be utilized with switch 16. The main component of the hand held shower with the tub outlet 27 *is* rubber spool 17 that is controlled by push/pull switch 16 (switch 16 rotates about pivot pin 19). Spool 17 covers either water channel 23 (Figure 1(c)) or water channel 25 (Figure 1(d)). Water channel 23 is connected to the tub outlet 27 and water channel 25 is connected to shower outlet 29. Water inlet 31 is positioned at one end of fixture 10 as illustrated and is connectable to faucet base 20 as shown in Figure 2 (faucet handle 31 controls the water flow to fixture 10).

In essence, a "tub filler function" is added to a conventional hand held shower or to a shower nozzle face in a tub spout. Figures 1(a) and I(b) show a hand held fixture 10 with shower and tub filler functions. This hand held fixture is usually attached and is in fluid communication to an existing showerhead supply pipe or it replaces the entire existing showerhead., where the water supply to the showerhead is temperature regulated by a separate valve or valve system. Figures 2(a)-2(c) show fixture 10 having both aforementioned functions whereby a common ordinary stationary tub fill spout fixture 10 is usually used to fill the bathtub with water, where the tub spout receives water from a separate or integrated valve or valve system. In this invention, Fixture 10 is removable from the faucet base 20 via a flexible connection to the spout connector 18 in order to be used as a hand-held shower or can be used to fill the tub. (the housing for the hand-held shower is not shown).

The plumbing industry uses different types of shower valves (pressure balanced valve, thermostatic valves, shut off valves or diverter valves) for in-wall shower/tub applications. The shower valves are associated with both shower head device and/or a tub filling spout device, where the shower valve regulates the temperature of the water supplied to the water delivery device. The industry term "shower" does not limit the application of the valve to merely showers, it encompasses any valve associated with a shower or tub which regulates temperature and flow. A shower valve can have a single stem or a stem for each temperature water supply (hot/cold) which usually includes a means to regulating the amount of flow as well (from shut-off to maximum flow). Modern faucets in a shower environment are required to include a thermostatic means to prevent water that is too hot from flowing onto the user, as a well as a pressure balancing means which compensates for the fluctuation or difference in the water pressure of the water supply between the hot and cold delivery sides. A diverter valve is used to channel the temperature regulated water flow to either a tub spout or a shower head. In many situations the valve is plumbed inside the wall and after installation is very difficult to remove without extensive labor and the attendant cost. In the cases where the valves are installed outside the walls (known as exposed valve), it is easy to remove but requires independent valves to shut off the water supply.

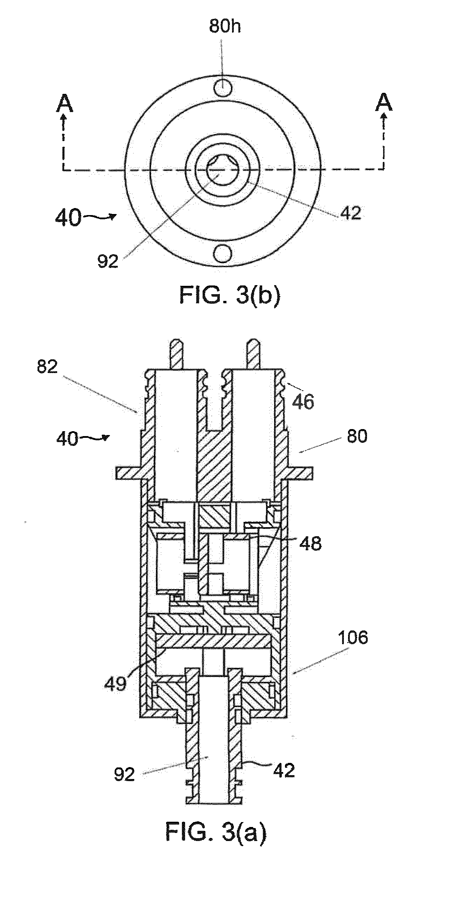

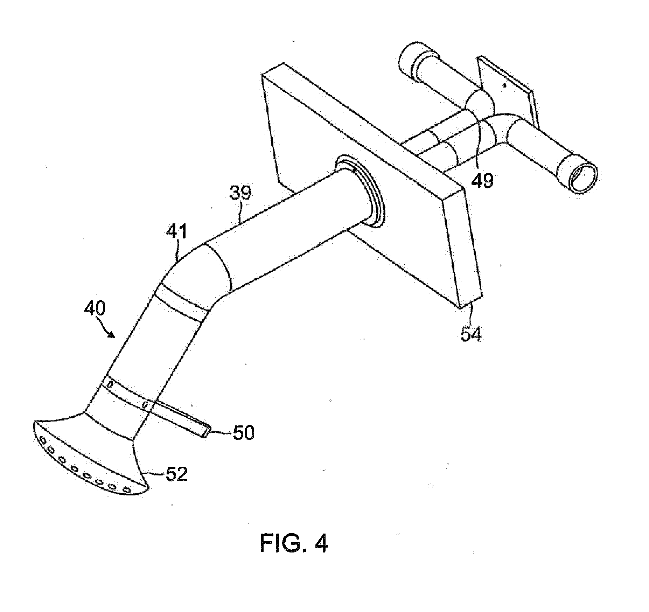

.The second embodiment 40 of the present invention is shown in Figures 3(a) - 3(c) and 4 and provides a miniature plumbing shower valve that is hidden in the shower arm (or replaces the shower arm), the water outlet being coaxial with the valve body and also the shower head. A lever 50 for turning the water on and off is coupled to the valve outlet 42 and the shower head 52 is placed directly on the valve outlet 42.

Referring to Figures 3(a) and 3(b), a dual pipe inlet 46 is connected to the dual pipe hot and cold water supply valve 40. The inlets supply hot/cold water to the anti scalding mechanism 48 (pressure balanced or thermostatic systems). After water exits anti-scalding mechanism 48, the water temperature is adjusted by the ceramic disks 49 which are controlled by rotating valve 42, the disks 49 also functioning to turn the water on or off.

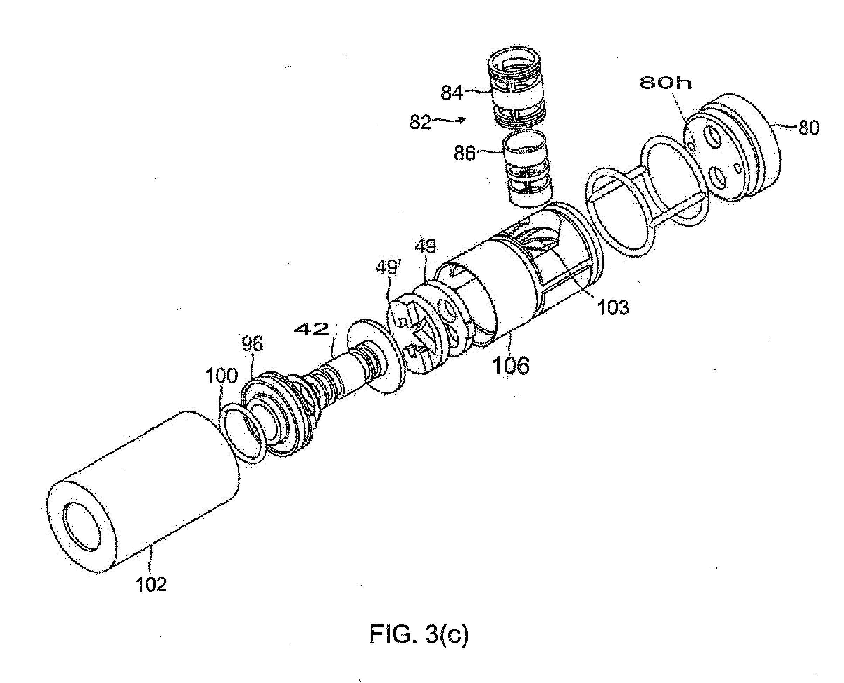

Figure 3(c) is an exploded view showing the components of fixture 40.

Hot and cold water flows inside the valve trough end cap 80, the water passing through pressure balancing mechanism 82 which comprises piston housing 84 and piston 86. The pressure balancing mechanism 82 is designed to adjust any difference in pressure between the hot and cold supply pipes to prevent a user from being scalded (mechanism 82 and similar devices are commercially available).

After the water passes through pressure balancing mechanism 82, it continues to flow through ceramic disks 49 and 49'. As noted previously, the disks stop/start/mix the hot and the cold water. After being mixed, the water proceeds through hollow stem 92 of rotating valve 42 (the valve 42 is secured to ceramic disk 49'), fixture 40 being connected with shower head 52 (Figure 4) whereby water flowing out of stem 92 flows into showerhead 52. Seal cap 96 and the O-ring 100 prevent system water leaks. Cartridge housing 102 screws onto end cap 80, securing all the components in place. Cartridge body 106, with the pressure balancing mechanism 82 positioned in aperture 103, is secured within cartridge housing 102.

Figure 4 shows fixture 40 threadably coupled between a shower arm extension 41, on-off lever 50 and shower head 52. Shower arm 39 extends from wall 54 as illustrated. Lever 50 is secured to the cartridge stem 92 with a set screw, lever 50 and the cartridge stem rotating approximately 180 degrees around its axis to the shut off position, the cartridge completely closing the hot and cold water way. If lever 50 is rotated further, the cartridge will open the cold water way, the cold water mixing with the hot water. If the lever is rotated 360 degrees, only the hot water way will be open.

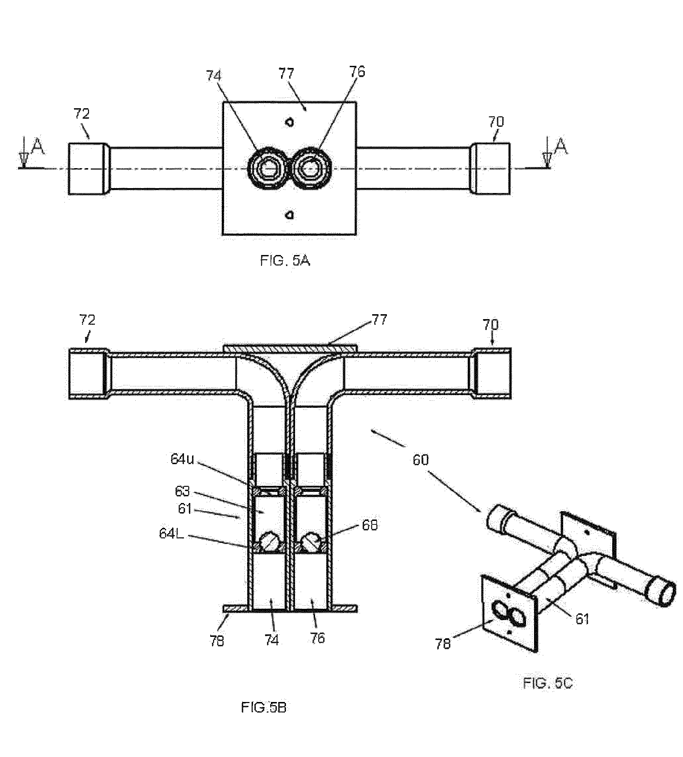

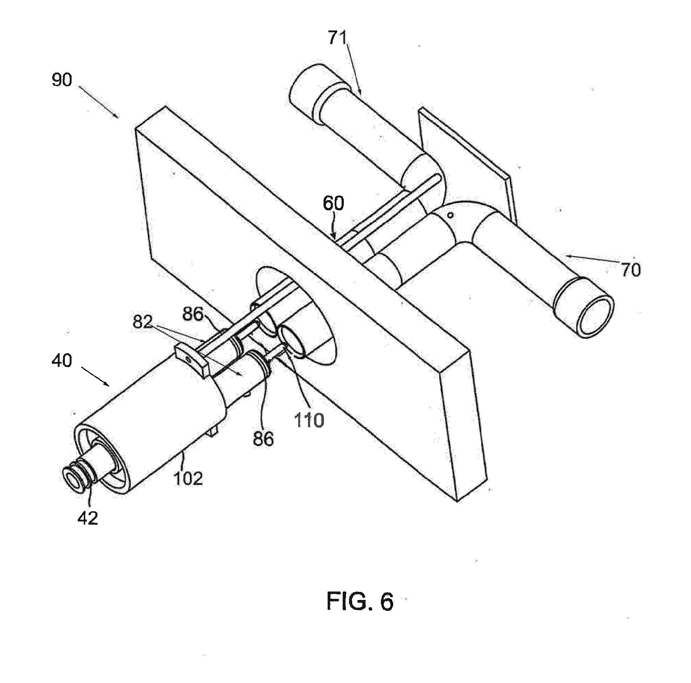

Figures 5(a)- 5(e) and 6 illustrate a third embodiment of the present invention.

As set forth hereinabove, the plumbing industry, for in wall shower/tub shower applications, use different types of shower valves (pressure balanced valve, thermostatic valves, shut off valves or diverter valve). In many situations the valve is plumbed inside the wall and, after installation, is difficult to remove without extensive labor and cost. In the cases where the valves are installed outside the walls (known as exposed valve), it will be easy to remove but this requires independent shut-off valves.

The dual pipe hot and cold water supply fixture 60 with a self seal mechanism describes a plumbing fixture used to deliver hot and cold water to a shower valve (pressure balanced valve, thermostatic valve, shut off valve or diverter valve). The embodiment provides a plumbing fixture that enables a shower valve mounted in the wail or outside of the wail, to be disconnected without shutting off the water supply or removing the walls.

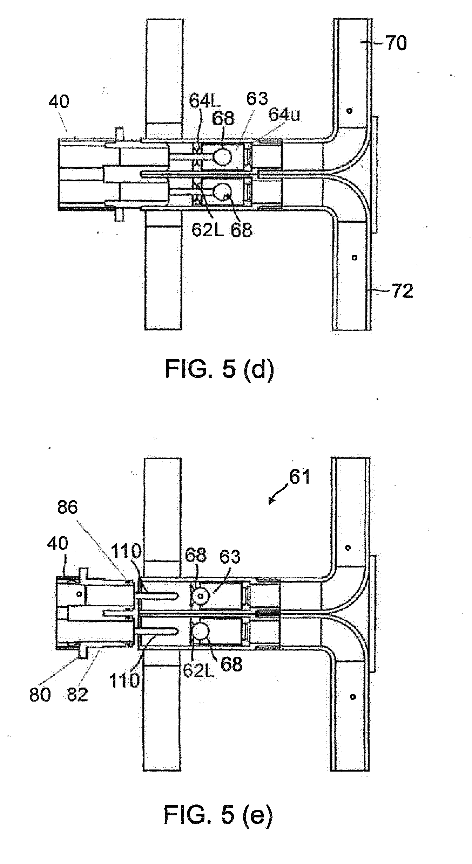

Fixture 60 solves this problem by adding a self sealing mechanism 61 inside the supply pipes. The self sealing mechanism 61 comprises a core 63 with sealing seats 62 and 64 and moving balls 68. When the inlet pipes 70 (cold) and 72 (hot) are connected to the water supply (the cold and hot water pipes are positioned within shower arm 49), the balls 68 will be pushed against the downstream sealing seats 62 and 64 by the pressure of the water supply thus sealing the outlets 74 and 76, the water being trapped inside the pipes. The sealing seats are of a material that is softer than the material used in moving balls 68. In the present invention, stainless steel balls were used and the sealing seat were constructed of a Teflon impregnated polymer, though other combinations of materials will be acceptable so long as the means for sealing create a positive and complete seal prevent water flow past the seats under the presence of water pressure. As noted in Figure 5(b) and Figure 5(d), the shape of the sealing seats conform to the radius of the moving balls whereby the moving balls are partially submerged into the sealing seat. The operating modes of the valve system are shown in Figures 5(d) and 5(e).

As noted above, system 60 is designed to provide hot/cold water to the shower valve while also sealing the water paths when the valve is removed from the system.

In the "on" position shown in Figure 5(d), the shower valve and shower arm 49 are connected to the system by having push pins 110 push against sealing balls 68 thus removing the balls 68 from rubber seals 62 and 64. The water is then allowed to flow towards the shower arm 49 and the valve.

Figure 5(e) illustrates the system "off' position wherein the valve (shower arm 49, cold water pipe 70, hot water pipe 72 and pins 110) and/or shower arm 49 are removed from the system when, for example, the shower arm has to be replaced which in turn requires the water to be shut off.

In the "off mode, the sealing balls 68 are compressed by the water pressure against the rubber seals 62 and 64 thus shutting off the water supply. This technique for shutting off a water supply is convenient and economical since additional shut-off valves are not required, the system only requiring a single dual check valve.

Figure 6 shows an assembly between the water supply fixture 60 and valve 40. The valve 40 has two legs 82, with O-rings 86 and push pins 110. When valve 40 is connected to fixture 60, the push pins 110 will push against the sealing balls 68; in this way the sealing balls 68 will be removed from the downstream sealing seats 66 and 68 and the water will flow through outlets 74 and 76 as seen in Fig. 5(b). Fixture 60 extends partially through an opening formed in wall 90.

While the invention has been described with reference to its preferred embodiments, it will be understood by those skilled in the art that various changes may be made and equivalents may be substituted for elements thereof without departing from the true spirit and scope of the invention. In addition, many modifications may be made to adapt a particular situation or material to the teachings of the invention without departing from its essential teachings.

## Claims

1. A water delivery device with a first outlet that allows, in a first mode of operation, water flow to said first outlet not exceeding a first predetermined values to fill a bath tub with water and a second mode of operation wherein a second outlet is provided for showers where water flow to said second outlet does not exceed a second predetermined value; and a mode selector switch which enables a user to choose either said first or second mode of operation.

2. . A water delivery device as in Claim 1 where said first predetermined water flow value is five gallons per minute.

3. A water delivery device as in Claim 1 where said second predetermined water flow value is two gallons per minute.

4. A water delivery device as in Claim 1 where said device is capable of being held in a user's hand or is removably attached to a stationary water source.

5. A water delivery device as in Claim 1 where said device capable of being held in a user's hand replaces an existing showerhead and is fluidly connected to a temperature regulated water supply.

6. A dislocatable self-sealable dual pipe hot and cold water supply valve that is coaxially related to the axis of the water flow and is axially rotatably adjustable with single point of discharge comprising;
a self-sealing piping structure port comprising of a dual piping interface, said interface capable of joinery to, and fluid communication with, an existing piping structure separately supplying hot and cold water, and a dual reservoir section fluidly connected to said dual piping interface, each said reservoir core section having an individual sealing seat with an associated moving ball and a pipe outlet, where water flows through said reservoir section, around said ball into said outlet; and
a rotatable valve body housing fluidly connected to and dislocatable from said self-sealing piping structure port, comprising a moving ball dislocation means, an anti-scalding and temperature balancing means, a cartridge case containing flow adjusting means and water pressure balancing controls disks, and an axially rotating and displaceable hollow valve outlet, said outlet coaxial to flow of water through said valve.

7. A dislocatable self-sealable dual pipe hot and cold water supply valve that is coaxially related to the axis of the water flow and is axially rotatably adjustable with single point of discharge as in Claim 9 where said moving ball associated with each said seal seat is of sufficient size to achieve a complete seal against said seal seat sealing means by the pressure of the water flow and preventing any flow of water past said seal seat, where the shape of said sealing seat allows for the partial submergence of said moving ball into said sealing seat and where said moving ball dislocation means is capable dislodging said balls from said seats allowing water flow to proceed to said pipe outlet.

8. A dislocatable self-sealable dual pipe hot and cold water supply valve that is coaxially related to the axis of the water flow and is axially rotatably adjustable with single point of discharge as in Claim 9 where said flow adjusting means is in circumferential communication with said valve body housing, where said flow adjusting means is capable of regulating flow of water from maximum flow to shutoff of the discharge of water into said valve outlet through the axial rotation of said housing.

9. A dislocatable self-sealable dual pipe hot and cold water supply valve that is coaxially related to the axis of the water flow and is axially rotatably adjustable with single point of discharge as in Claim 11 where said flow adjusting means is in communication an external lever perpendicular to said axis, where said flow adjusting means is capable of regulating flow of water from maximum flow to complete shutoff of the discharge of water into said valve outlet through the rotation of said lever.

10. An improved fixture for showering comprising a dislocatable self-sealable dual pipe hot and cold water supply valve that is coaxially related to the axis of the water flow and is axially rotatably adjustable with single point of discharge, and a water delivery fixture fluidly connected to said valve, said fixture comprising a first outlet that allows, in a first mode of operation, water flow to said first outlet not exceeding 5 gallons per minute to fill a bath tub with water and a second mode of operation wherein a second outlet is provided for showers where water flow to said second outlet does not exceed 2 gallons per minute; and a mode selector switch which enables a user to choose either said first or second mode of operation.

11. An improved fixture for showering as in Claim 10 where said water delivery fixture is handheld and said fixture is locatable apart from said valve, said fixture being fluidly connected through a flexible connection to said valve.

12. An improved fixture for showering as in Claim 10 where said water delivery device is flexibly coupled as a spout where said water delivery device is immediately appurtenant to and fluidly connected to said valve.

13. An improved fixture for showering as in Claim 10 where said water delivery fixture is fluidly connected to said valve, said fixture is threadably connected to said valve.
